# EUROPÄISCHE PATENTSCHRIFT

(11) **EP 1 055 576 B1**
(45) Veröffentlichungstag und Bekanntmachung des Hinweises auf die Patenterteilung: **18.05.2005**
(21) Anmeldenummer: 00108702.2
(22) Anmeldetag: 22.04.2000
(51) Int. Cl.: B60T 8/40, B60T 13/68, B60T 17/22

(54) **Elektrohydraulisches Bremssystem und Verfahren zu seiner Steuerung**
Electro-hydraulic braking system and control method therefor
Système de freinage électro-hydraulique et son procédé de commande

(30) Priorität: 22.05.1999 DE 19923689
(43) Veröffentlichungstag der Anmeldung: 29.11.2000
(73) Patentinhaber: ROBERT BOSCH GMBH, 70442 Stuttgart (DE)
(72) Erfinder: Beck, Harald, 97072 Würzburg (DE); Binder, Juergen, 73760 Ostfildern-Kemnat (DE); Hachtel, Juergen, 74219 Moeckmuehl (DE); Gottwick, Ulrich, 70192 Stuttgart (DE); Schubert, Michael, 75382 Althengstett (DE)

(56) Entgegenhaltungen:
- WO-A-00/18625
- WO-A-00/55022
- DE-A- 3 729 183
- DE-A- 19 513 128
- DE-A- 19 604 126
- DE-C- 19 713 561

## Beschreibung

### Stand der Technik

Die vorliegende Erfindung betrifft ein elektrohydraulisches Bremssystem nach dem Oberbegriff des Patentanspruchs 1 sowie Verfahren und eine Vorrichtung zu seiner Steuerung nach den Oberbegriffen der Patentansprüche 3 und 18.

Aus der DE 196 51 154 A1 ist ein Verfahren zur Steuerung einer Bremsanlage bekannt, wobei eine von einem elektrischen Motor betriebene Pumpe vorgesehen ist, die ein- und ausschaltbar ist, wobei die Nachlaufzeit der Pumpe nach dem Abschalten ermittelt wird und abhängig von der Nachlaufzeit die Steuersignale für den Bremskraftaufbau bzw. - abbau korrigiert werden. Mittels dieses Verfahrens wird eine Abschätzung der Temperatur der Bremsanlage angestrebt. Elektrohydraulische Bremsanlagen, bei welchen eine Hydraulikflüssigkeit aus einem Druckspeicher über Ventilmittel in den jeweiligen Radbremszylinder einsteuerbar ist, sind nicht Gegenstand dieser Druckschrift.

Aus der DE 196 04 126 A1 ist ein Verfahren zur Steuerung der Bremsanlage eines Fahrzeugs bekannt, bei welchem durch wenigstens ein Steuersignal mit wenigstens einem veränderlichen Parameter Druck auf- und/oder abgebaut wird. Dabei wird der wenigstens eine Parameter abhängig von wenigstens einer die Druckänderungsdynamik beeinflussenden Größe korrigiert. Als beeinflussende Größe wird insbesondere die Temperatur der Hydraulik bzw. die Umgebungstemperatur genannt. Auch diese Druckschrift behandelt nicht die Steuerung von elektrohydraulischen Bremsanlagen.

Es ist bekannt, daß die Funktion von elektrohydraulischen Bremssystemen zu tiefen Temperaturen hin beschränkt ist, das die Viskosität der Bremsflüssigkeit in diesem Fall stark zunimmt. Druckausgleichsvorgänge können hierbei nur langsam durchgeführt werden, so daß die Wirkung von vorgesehenen Ventilen bzw. einer Pumpe, welche zur Ladung des Druckspeichers des elektrohydraulischen Bremssystems dient, stark vermindert ist. Zu hohen Temperaturen hin ist die Funktion eines elektrohydraulischen Bremssystems ebenfalls beschränkt, da die verwendeten elektrischen Bauelemente nur eine beschränkte Lebensdauer bei hohen Temperaturen aufweisen.

Aus der DE 197 29 097 A1 ist ein Verfahren zur Steuerung einer Bremsanlage bekannt, wobei zur Steuerung der Bremsanlage der Druck eines Hochdruckspeichers berücksichtigt wird. Im Normalbetrieb wird dieser Speicherdruck durch einen entsprechenden Drucksensor erfasst. Fällt dieser Speicherdruck jedoch aus, so wird mittels der erfassten Temperatur des Hydroaggregats eine Speicherdruckschätzung durchgeführt.

In der DE 198 43 861 A1 ist ein Verfahren beschrieben, bei dem ein Temperaturwert, der die Temperatur eines Teils einer elektronischen Schaltung repräsentiert, mit einem Schwellenwert verglichen wird. In Abhängigkeit von diesem Vergleich wird anschließend wenigstens eine Maßnahme eingeleitet, die beispielsweise die Temperatur wenigstens eines Teils der elektronischen Schaltung reduziert.

Aus der nicht vorveröffentlichten Schrift EP 0 937 621 A2 ist ein Verfahren bzw. eine Vorrichtung zur Steuerung einer Bremsanlage eines Fahrzeugs bekannt. Die in dieser Schrift beschriebene Bremsanlage weist einen als Zwischenpuffer dienenden Hochdruckspeicher auf, dessen Druck durch einen Drucksensor erfasst wird. Dabei kann in einer speziellen Ausgestaltung eine Überwachung der Druckversorgung stattfinden, um im Fehlerfall einen Notbremsbetrieb einzuleiten. Zu diesem Zweck wird ein Sollwert für die Speicherdruckänderung abgeschätzt, der mit der aktuellen Speicherdruckänderungen verglichen wird. Um den Sollwert noch genauer einzugrenzen, kann zusätzlich ein Temperatursignal in die Steuereinheit eingelesen wird.

Es hat sich gezeigt, daß der genannte Stand der Technik bezüglich der speziellen Problematik bei einem elektrohydraulischen Bremssystem nicht in jeder Beziehung optimale Ergebnisse liefert.

Aufgabe der Erfindung ist daher die Schaffung eines elektrohydraulischen Bremssystems, dessen Funktionalität sowohl bei hohen, als auch niedrigen Temperaturen verbessert ist sowie der zugehörigen Verfahren und einer Vorrichtung zur Steuerung des elektrohydraulischen Bremssystems.

Diese Aufgabe wird gelöst durch ein elektrohydraulisches Bremssystem mit den Merkmalen des Patentanspruchs 1 sowie ein Verfahren und eine Vorrichtung zu seiner Steuerung mit den Merkmalen des Patentanspruchs 2.

Durch die erfindungsgemäße Erfassung der Temperatur bei einem elektrohydraulischen Bremssystem ist eine Vielzahl von Funktions- und Überwachungsvorgängen durchführbar, welche in herkömmlichen elektrohydraulischen Bremssystemen nicht berücksichtigt werden konnten. Insbesondere bei niedrigen und hohen Temperaturen kann ein einwandfreies bzw. verbessertes Funktionieren des elektrohydraulischen Bremssystems gewährleistet werden.

Vorteilhafte Ausgestaltungen des erfindungsgemäßen elektrohydraulischen Bremssystems sowie des erfindungsgemäßen Verfahrens und der Vorrichtung zu seiner Steuerung sind nachfolgend in der Beschreibung gezeigt und sind Gegenstand der Unteransprüche.

Zweckmäßiger Weise weisen die Mittel zur Erfassung der Temperatur wenigstens einen Temperatursensor auf. Es erweist sich insbesondere als vorteilhaft, mehrere Temperatursensoren zu verwenden, so daß beispielsweise im Rahmen einer Sicherheitsbetrachtung eine zwei- aus- drei-Auswahl durchführbar ist, um das System bezüglich der Temperatur auch im Fehlerfall eines Temperatursensors weiter betreiben und überwachen zu können. Es ist beispielsweise möglich, als Temperatursensoren in Drucksensoren vorgesehen Temperaturmeßelemente zu verwenden. Ebenso kann aber Temperatursensorik zusätzlich eingebracht werden.

Gemäß einer besonders bevorzugten Ausgestaltung des erfindungsgemäßen Verfahrens werden in Abhängigkeit von der erfaßten Temperatur unter Berücksichtigung einer ausreichenden Funktionalität des elektrohydraulischen Bremssystems wärmeerzeugende Prozesse minimiert.

Beispielsweise im Falle einer Dauerbremsung müssen die Schalt- und Trennventile des elektrohydraulischen Bremssystems über längere Zeiträume bestromt werden. Die entstehende Wärme in den Ventilen mit den Bauelementen im Steuergerät führt zu einer stetigen Zunahme aller Bauteiltemperaturen. Mittels des erfindungsgemäß erfaßten Temperatursignals kann nun festgestellt werden, daß die Temperatur gesetzte Grenzen überschreitet, so daß anhand dieser Information alle Wärme liefernden Prozesse in dem Steuergerät von dem Steuergerät im Hinblick auf ihren Beitrag zur Gesamtwärme geändert bzw. minimiert werden können, wobei mit zunehmender Temperatur funktionelle Einschränkungen, stets unter Wahrung einer erforderlichen Grundbremsfunktion in Kauf genommen werden können.

Zusätzlich zur Durchführung verschiedener Maßnahmen, z.B. bei Überschreitung von Grenzwerten, können diese Maßnahmen zumindest teilweise den Fahrzeuginsassen, insbesondere dem Fahrer visualisiert werden. Dies bedeutet, daß beispielsweise ein Abschalten bestimmter Wärme erzeugender Prozesse oder eine reduzierte Funktionalität solcher Prozesse dem Fahrer z.B. durch eine Anzeigevorrichtung am Armaturenbrett oder eine sonstige Visualisierungsvorrichtung angezeigt wird.

Bei Überschreiten einer voreinstellbaren Temperaturgrenze im Steuergerät kann beispielsweise die folgende Strategie bzw. die zugehörigen Maßnahmen ausgewählt werden, um eine Überhitzung der zur Steuerung nötigen elektrischen und mechanischen Bauteile (beispielsweise in einem Anbausteuergerät, d.h. einem direkt an einem Hydraulikaggregat angebauten Steuergerät) zu verhindern: An der Vorderachse kann zunächst ein Umschalten in einen Backup-Betrieb (eine vorgebbare Rückfallebene) erfolgen, so daß keine Ventile an der Vorderachse angesteuert werden und an der Hinterachse eine Druckregelung mit offenen Balanceventilen durchgeführt wird. Im Falle eines weiteren Anstiegs der Temperatur, kann ferner auf die Full-Back-up-Rückfallebene zurückgegriffen werden, bis bei Erhalt eines entsprechenden niedrigeren Temperatursignals die elektrohydraulische Bremsanlage wieder teilweise oder vollständig zugeschaltet werden kann. Mit dem Begriff Rückfallebene ist somit wenigstens eine Funktionsebene des elektrohydraulischen Bremssystems benannt, zu welcher man durch Einleitung bestimmter Maßnahmen, wie z.B. dem Abschalten bestimmter Funktionen gelangt. Bei mehreren Rückfallebenen ist die unterste Rückfallebene bei eingesetzter Regelung bzw. Steuerung des elektrohydraulischen Systems, diejenige, die ein funktionelles Minimum bezüglich der eingesetzten Regelung, also eine Grundfunktion gewährleistet. Als Regelung bzw. Steuerung sind alle die Bremswirkung und/oder die Fahrstabilität und/oder die Sicherheit des Fahrzeugs beeinflussenden Steuerungen bzw. Regelungen für das elektrohydraulische Bremssystem einsetzbar. Die Full-Back-up-Rückfallebene bezeichnet dann den Fall, daß die Regelung bzw. Steuerung abgeschaltet wird und lediglich der verbleibende hydraulisch-mechanische Eingriff eingesetzt wird.

Zweckmäßiger Weise wird in Abhängigkeit von der erfaßten Temperatur das Puls-Pulspausen-Verhältnis bei einer getakteten Ansteuerung einer Pumpe im elektrohydraulischen Bremssystem variiert. Normalerweise wird die Pumpe eines elektrohydraulischen Bremssystems nur dann voll angesteuert, wenn der Speicherdruck unterhalb eines minimalen Bremswertes abgesunken ist. Oberhalb dieses Schwellenwertes wird die Pumpe in der Regel getaktet betrieben, um das Geräuschniveau möglichst niedrig zu halten. Ausnahmen von dieser Regelungs- bzw. Steuerungsstrategie sind herkömmlicherweise nur solche Situationen, bei denen man anhand des Speicherdruckverlaufes auf eine sehr große Abnahme des Speicherdrucks schließen kann. Bei sehr tiefen Temperaturen kann jedoch die Förderleistung der Pumpe derart herabgesetzt sein, daß eine zusätzliche Taktung zu langen Speicherdruckaufbauzeiten führen würde, und damit die Systemverfügbarkeit gefährdet wäre. Ein derart langsamer Druckanstieg würde beispielsweise auch die Sicherheitslogik des elektrohydraulischen Bremssystems ansprechen lassen, da der Druckanstieg ohne weitere Information zunächst unplausibel ist und auf einen Fehler im System schließen läßt. Mit der erfindungsgemäß zur Verfügung gestellten Temperatur-Information kann dieses Tieftemperaturverhalten der Ladepumpe als plausibel eingestuft werden, so daß ein fehlerhaftes Abschalten des elektrohydraulischen Bremssystems vermieden werden kann. Hierdurch kann die Verfügbarkeit des elektrohydraulischen Bremssystems auch in kurzen Tieftemperaturphasen (beispielsweise bis zur Erwärmung des Motorraums) aufrechterhalten werden, bzw. der Zustand des elektrohydraulischen Bremssystems als temporärer Tieftemperaturzustand erkannt werden.

Es erweist sich als vorteilhaft, die erfaßte Temperatur bei der Regelung des Systemdrucks in dem elektrohydraulischen Bremssystem insbesondere während eines Druckaufbaus in wenigstens einer Radbremse, durch Öffnen entsprechender Einlaßventile, zu berücksichtigen. Ein Druckregler des elektrohydraulischen Bremssystems, welcher in Abhängigkeit beispielsweise von Fahrerwünschen oder Antiblockiersystemund/oder Antriebsschlupfregelungs-Steuersignalen den in den Radbremsen einzustellenden Druck regelt, neigt bei tiefen Temperaturen zum Schwingen. Dies betrifft auch übrige die Bremswirkung und/oder die Fahrstabilität und/oder die Sicherheit des Fahrzeugs beeinflussende Regelungen. Dieser Effekt beruht auf dem physikalisch veränderten Verhalten der Bremsflüssigkeit bei tiefen Temperaturen. Beispielsweise bei Öffnen der Einlaßventile zum Druckaufbau in den Radbremsen bilden sich Druckwellen aus, die aufgrund der veränderten Elastizität der Bremsflüssigkeit bei tiefen Temperaturen ein wesentlich verändertes zeitliches Verhalten im Vergleich zu höheren Temperaturen bewirken. Für die Druckregelung bedeutet dies in der Regel eine Phasenverzögerung zwischen Druck-Istwert und dem (in einem Hydraulikaggregat) gemessenen Raddruck-Istwert. Durch Erfassung und Berücksichtigung der Systemtemperatur können derartige Phasenverzögerungen bei der Regelung z.B. im Falle von tiefen Temperaturen in die Regelstrecke einbezogen werden, wenn auf Tieftemperatur erkannt wird.

Es erweist sich als vorteilhaft, die erfaßte Temperatur zur Abschätzung des Drucks in dem Druckspeicher zu verwenden. Bei ordnungsgemäß arbeitenden elektrohydraulischen Bremssystemen wird der im Druckspeicher herrschende Druck kontinuierlich eingelesen, so daß die Pumpe solange angesteuert werden kann, bis der gewünschte Speicherdruck erreicht ist. Zu diesem Zwecke wird üblicherweise ein Speicherdrucksensor verwendet. Falls dieser Speicherdrucksensor defekt ist, oder die Sensorzuleitungen Kurzschlüsse zu benachbarten Pins bzw. Anschlüssen hin aufweisen, kann aus den Regelströmen an den Regelventilen auf den hydraulischen Druckunterschied in einem Rad-Einlaßventil und damit bei bekanntem radseitigem Druck auf den Speicherdruck geschlossen werden. Darüber hinaus sind weitere Verfahren bekannt, die es ermöglichen, den Speicherdruck zu schätzen.

Vorteilhafter Weise steuert man ein Einlaß-Regelventil der Hinterachse so lange mit einer rampenförmigen Strom-Zeitvorgabe an, bis ein erster Druckanstieg am Raddrucksensor zu bemerken ist, der sofort wieder abgebaut wird und sich so nicht störend merkbar macht. Damit keine störende Überlagerung durch Nichtlinearitäten in der Ventilstrom-Öffnungsdruck-Kennlinie während einer Teilbremsung stattfindet, wird dieses Rad aus der Regelung der elektrohydraulischen Bremsanlage herausgenommen bzw. drucklos geschaltet. Die Bestromung, bei der sich ein Druckanstieg zeigt, ist ein Maß für die hydraulische Druckdifferenz am Ventil. Hiermit ist in der Regel eine Speicherdruckabschätzung mit ausreichender Genauigkeit möglich, um einen Notbetrieb bei fehlerhaft ausbleibenden Speicherdruck-Informationen bzw. Speicherdrucksensorausfall aufrecht erhalten zu können. Dadurch, das erfindungsgemäß eine Temperaturinformation bezüglich des elektrohydraulischen Bremssystems vorliegt, kann die Umrechnung des Regelstroms in Magnetkräfte und damit der Druckunterschied am Einlaß-Regelventil genauer durchgeführt werden, so daß eine exaktere und zuverlässigere Speicherdruckabschätzung möglich ist. Zusätzlich kann die Stromrampe bei Vorliegen von tiefen Temperaturen langsamer gefahren werden, um dem veränderten Zeitverhalten der kalten Bremsflüssigkeit Rechnung zu tragen. Insgesamt erhöht sich durch die Berücksichtigung der Temperatur des elektrohydraulischen Bremssystems die Zuverlässigkeit des Notbetriebs.

Vorteilhafter Weise wird die erfaßte Temperatur darüber hinaus allgemein bei der Steuerung der Druckmodulatoren der jeweiligen Radbremse verwendet.

Zweckmäßiger Weise wird die erfaßte Temperatur zur Überwachung der Ladung und/oder der Entladung des Druckspeichers verwendet. Während des Pumpbetriebs wird der Gradient des Druckes in dem Druckspeicher auf plausible Werte hin überwacht. Herkömmlicher Weise muß das zulässige Plausibilitätsband relativ weit gefaßt werden, da auch geringe Druckgradienten, welche die Pumpe bei niedrigen Temperaturen von beispielsweise etwa -30° zu erzeugen in der Lage ist, abgedeckt sein müssen. Durch Verwendung der Temperaturinformation kann dieses Plausibilitätsband stark eingeengt werden, so daß eine effektivere Überwachung der Ladung des Druckspeichers möglich ist. Insbesondere im Falle eines Anfahrens bzw. Starts bei niedriger Temperatur kann die Förderleistung der Pumpe so klein sein, daß keine Speicherladung erfolgt. In diesem Fall kann zunächst ein Start unter Berücksichtigung eines temporären Backup-Systems erfolgen, wobei das elektrohydraulische Bremssystem zugeschaltet werden kann, sobald ein entsprechendes Temperatursignal erhalten wird. Das temporäre Backup-System kann somit die Funktionalität einer bestimmten Rückfallebene, insbesondere der Rückfallebene mit den Grundfunktionen, steuern. Ebenso können aber mehrere funktionelle Rückfallebenen durch das temporäre Backup-System verwaltet und eingesetzt werden.

Es erweist sich als vorteilhaft, die erfaßte Temperatur bei der Überwachung bzw. Prüfung von Ventilen vor oder während der Fahrt des Kraftfahrzeugs zu berücksichtigen. Druckausgleichsvorgänge, wie sie beispielsweise im Rahmen sogenannter Pre-Drive-Checks oder Drive-Checks zur Überwachung von Schalt- und Regelventilen stattfinden (Überprüfung der Ventile auf definitionsgemäße Funktion) benötigen bei tiefen Temperaturen eine längere Zeit. Durch die erfindungsgemäße Berücksichtigung der Temperatur-Information können die Wartezeiten/Filterzeiten für solche Effekte temperaturabhängig angepaßt (beispielsweise bei tiefen Temperaturen verlängert, bei hohen Temperaturen verkürzt) werden, so daß eine erhöhte Sicherheit gegen fehlerhaftes Abschalten gewährleistet werden kann.

Zweckmäßiger Weise wird die erfaßte Temperatur ebenfalls bei der Pedalwegsimulator (PWS)- Überwachung berücksichtigt. Die Pedalwegsimulatior-Überwachung überprüft den Zusammenhang zwischen den Meßgrößen, die den Fahrerwunsch ausdrücken. Zur sicheren Erkennung des Fahrerwunsches ist die Erfassung von verschiedenen physikalischen Größen sinnvoll wie z. B. Pedalweg und Pedalkraft bzw. daraus abgeleitete Drücke, wie z. B. Verschiebung des Druckstangenkolbens oder der Hauptbremszylinderdruck. Diese Größen stehen in einem überwachbaren Zusammenhang, da obere und untere Toleranzen festgelegt werden können, innerhalb derer, die Meßgrößen in der Regel liegen müssen. Liegen die Meßwerte außerhalb dieses Toleranzbandes, wird auf Fehler erkannt, und auf einen entsprechenden Notbetrieb übergegangen. Temperaturabhängige Hystereseeffekte durch Reibungskräfte weiten diesen bei einer definitionsgemäß arbeitenden elektrohydraulischen Bremse auftretenden Bereich stark auf. Speziell bei tiefen Temperaturen treten wesentlich größere Abweichungen von dem Zusammenhang auf, der bei höheren Temperaturen gilt. Um Prüfschärfe zu gewinnen, wird vorteilhafter Weise abhängig von der Temperatur der Bremsanlage die zulässige Toleranzbreite aufgeweitet bzw. eingeschränkt.

Zweckmäßiger Weise wird die erfaßte Temperatur für eine Überwachung des Entlüfungszustandes der Rückfallebene verwendet. Zu diesem Zwecke kann man beispielsweise durch einen genau definierten Puls (z. B. Öffnen der Einlaßventile für eine definierte Zeit) eine geringe Menge Fluid bzw. Hydraulikflüssigkeit in die Radzangen schießen und anschließend feststellen, welcher stationäre Druck sich hierdurch einstellt. Da dieser Druck in starkem Maße von der vorliegenden Temperatur abhängt, kann durch die Berücksichtigung der Temperatur eine derartige Messung präzisiert werden, da die Druck-Volumen-Kennlinie temperaturabhängig ist.

Es erweist sich ferner als vorteilhaft, die erfaßte Temperatur bei der Überwachung des Verschleißzustandes des Druckspeichers zu berücksichtigen. Der ausgebildete Druckspeicher ist als Verschleiß- bzw. Wechselteil konzipiert. Die Funktionsfähigkeit dieses Speichers muß daher regelmäßig geprüft werden. Als Maß für die Güte des Speichers kann der Gasfülldruck verwendet werden. Dieser Gasfülldruck ist jedoch stark temperaturabhängig (beispielsweise 60 bis 120 bar über einen Temperaturbereich von -40°C bis 120°C). Bei Berücksichtigung der Temperatur des Systems können hier wesentlich genauere Messungen durchgeführt werden und damit zur Anzeige gebracht werden, ob der Druckspeicher getauscht werden muß.

Die Erfindung wird nun anhand der in der Zeichnung dargestellten Ausführungsbeispiele näher erläutert. Hierbei zeigt Figur 1 ein bevorzugtes Ausführungsbeispiel einer elektrohydraulischen Bremsanlage. In Figur 2 ist ein Verfahren zum Wechsel zwischen verschiedenen SteuerungsMaßnahmen unter Verwendung verschiedener Temperaturgrenzwerte dargestellt. Figur 3 zeigt für eine spezielle Anwendung, die Pumpenansteuerung, einen Zusammenhang zwischen Pumpendrehzahl und Temperatur.

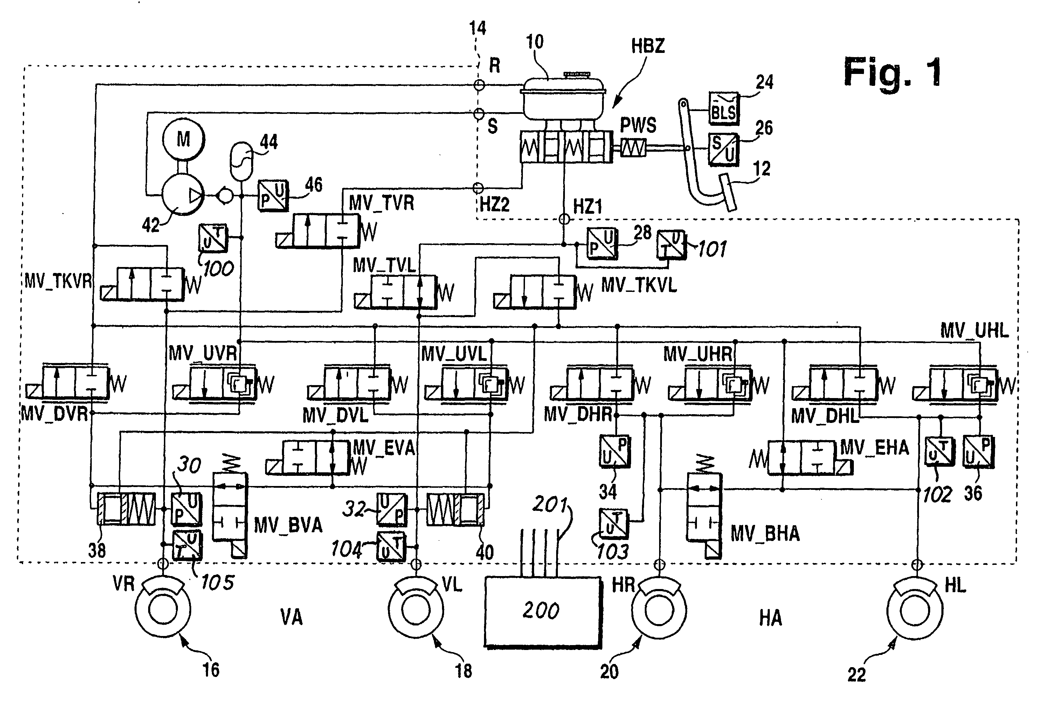

Die elektrohydraulische Bremsanlage in Figur 1 zeigt einen Hauptbremszylinder HBZ mit Vorratsbehälter 10, an den ein vom Fahrer betätigbares Bremspedal angebracht ist. Ferner ist ein Hydraulikaggregat 14 vorgesehen, welches Ventil- und Pumpenanordnungen zur Steuerung der Radbremsen 16, 18, 20 und 22 enthält. Mit dem Bremspedal 12 ist ein Bremspedalschalter 24 verbunden, welcher bei Betätigen des Bremspedals schließt und eine Meßeinrichtung 26 zur Erfassung der Auslenkung der Bremspedals. Der Bremspedalschalter 24 kann als einfacher Schließer ausgelegt sein, oder zur Verbesserung der Überwachbarkeit als doppelter Schalter mit einem Öffner und einem Schließer. Eine spezielle Ausführung zeigt den Bremspedalschalter 24 als Bremslichtschalter BLS. Ebenso kann die Meßeinrichtung 26 zur Erfassung der Auslenkung S des Pedals 12 zur Verbesserung redundant ausgelegt werden. Ferner ist ein Pedalwegsimulator PWS vorgesehen, welcher für den Fahrer bei Betätigen des Bremspedals 12 eine Gegenkraft simuliert. An den Hauptbremszylinder HBZ sind die zwei Bremskreise HZ1 und HZ2 angeschlossen. In diese ist jeweils ein Trennventil MV_TVR bzw. MV_TVL eingefügt, welches bei elektrisch angesteuerter Bremsanlage durch Bestromung geschlossen wird. Vor dem Trennventil mißt in zumindest einem der Bremskreise ein Drucksensor 28 den vom Fahrer über die Bremspedalbetätigung aufgebrachten Druck. Bei geschlossenen Trennventilen ist der Hauptbremszylinder hydraulisch vom Druckregelsystem abgetrennt. Im Druckregelsystem ist für jede Radbremse ein Druckmodulator für die Bremsdruckregelung enthalten. Ein Druckmodulator besteht dabei aus je einem Einlaßventil (MV_UVR, MV_UVL, MV_UHR, MV_UHL), je einem Auslaßventil (MV_DVR, MV_DVL, MV_DHR, MV_DHL) und je einem Drucksensor 30, 32, 34 und 36, der den Druck in der zur Radbremse führenden Leitung mißt. In den beiden Vorderraddruckmodulatoren befindet sich je ein Medientrennkolben 38 bzw. 40 zwischen den Ventilen (Ein- und Auslaßventil) und den Drucksensoren bzw. der Radbremse. Die Druckmodulatoren sind über Balanceventile MV_BVA und MV_BHA verbunden, die bei Bestromung voneinander unabhängig gesteuert werden können. Ferner sind Entlastungsventile MV_EVA bzw. MV_EHA für jede Achse vorgesehen, die im unbestromten Zustand den Druckabbau aus den Raddruckmodulatoren einer Achse erlauben. Sie verbinden die Druckmodulatoren einer Achse mit den zum Vorratsbehälter 10 führenden Rückführleitungen. Im elektrisch gesteuerten Betriebszustand sind diese beiden Ventile permanent bestromt, d. h. geschlossen. Ferner ist jeweils ein Temperaturkompensationsventil MVTKVL und MVTKVR für jeden Vorderraddruckmodulator vorgesehen. Diese Ventile sind unbestromt geschlossen und werden zum Druckabbau aus dem Druckmodulator eines Vorderrades durch Bestromung geöffnet, wenn bestimmte Bedingungen, insbesondere eine sehr lange Bremsdauer vorliegen. Die Temperaturkompensationsventile verbinden die Bremsleitung zur Radbremse mit der Rücklaufleitung. Die Energie für die Bremsdruckmodulation kommt aus einer von einem Elektromotor angetriebenen Pumpe 42, insbesondere einer Einkolben-Hochdruckpumpe. Diese ist an einen Druckspeicher 44, insbesondere einen Hochdruckspeicher, angeschlossen, der als Zwischenpuffer dient und dessen Druck durch einen Drucksensor 46 erfaßt wird. Die Druckleitung der Pumpe 42 führt zu den Einlaßventilen der Radbremsen, während die Saugleitung der Pumpe 42 mit dem Vorratsbehälter 10 verbunden ist. Bezüglich Einzelheiten der hydraulischen Schaltung wird auf das in Figur 1 dargestellte bevorzugte Ausführungsbeispiel verwiesen. Die Entlastungsventile MV_EVA und MV_EHA und die Temperaturkompensationsventile MV_TKVL und MV_TKVR entfallen in einem Ausführungsbeispiel. Aufgrund der oben gemachten Sicherheitsüberlegungen sind hier sechs Temperatursensoren 100 bis 105 dargestellt. Diese Temperatursensoren können einerseits als in den Drucksensoren 30, 32, 34, 36 und 46 enthaltene Temperaturmeßelemente oder andererseits als separate Temperatursensoren ausgelegt sein. Die Anzahl der Temperatursensoren ist hier aufgrund der zwei-aus-drei Sicherheitsüberlegung festgelegt. Genauso können mehr oder weniger, beispielsweise ein Drucksensor je Bremskreis, verwendet werden. Auch eine Temperaturschätzung kann dabei als Grundlage dienen. Eine Steuereinheit 200 führt die Steuerungs- bzw. Regelungsvorgänge bezüglich der elektrohydraulischen Bremsanlage durch. Aus Gründen der Übersichtlichkeit sind lediglich vier Zu- oder Ableitungen 201 schematisiert dargestellt.

Im Normalbetrieb arbeitet die in Figur 1 beschriebene Bremsanlage wie folgt. Der Fahrer tritt auf das Bremspedal. Er spürt dabei eine wegabhängige Gegenkraft. Diese Wegabhängigkeit wird durch die definierte Charakteristik des Pedalwegsimlulators PWS gebildet. Bei der Sensierung eines Bremswunsches über den Pedalwegsensor 26, den Bremspedalschalter 24 und/oder den Drucksensor 28 werden die Trennventile (MV_TVR und MV_TVL) und die Entlastungsventile (MV_EVA und MV_EHA) geschlossen. Im Hauptbremszylinder HBZ baut sich ein Druck auf, der aus der Pedalkraft resultiert. Aus den Signalen des Bremspedalschalters 24, des Wegsensors 26 und/oder des Drucksensors 28 wird der Bremswunsch des Fahrers beispielsweise als Sollverzögerung oder Sollbremskraft errechnet. Aus diesem Bremswunsch werden die einzelnen Soll-Radbremsdrücke gebildet. Je nach Fahrzustand und Schlupfbedingung werden diese Drücke modifiziert und über die Raddruckmodulatoren durch Ventilbestromungen eingeregelt. Im geschlossenen Regelkreis werden bei jeder Radbremse die aktuellen Drücke an den Raddrucksensoren für den Soll-Ist-Abgleich herangezogen. Bei unterschiedlichen Soll-Drücken im linken und rechten Rad einer Achse werden die Balanceventile (MV_BVA und MV_BHA) geschlossen und in jeder Radbremse der vorgegebene Soll-Druck durch Ansteuern der Einlaß- und Auslaßventile im Sinne einer Regelung des Ist-Bremsdruckes auf den Soll-Bremsdruck eingeregelt. Zum Druckaufbau an einer Radbremse wird das Einlaßventil soweit bestromt, daß sich der gewünschte Soll-Druck in der Radbremse mit der gewünschten Dynamik ausbildet. Eine Druckabnahme wird entsprechend durch Bestromung des Auslaßventils erreicht, wobei Bremsflüssigkeit in den Vorratsbehälter über die Rücklaufleitung zurückfließt. Die Entlastungsventile kommen im Fehlerfall des Systems zur Wirkung. Wenn während einer Bremsung das elektrische System ausfällt, fallen alle Ventile in ihren unbestromten Zustand zurück. Die Entlastungsventile öffnen dann die Druckmodulatoren zur Rücklaufleitung, so daß kein Bremsdruck eingesperrt werden kann. Ebenso gestatten diese Ventile im Ruhezustand den Volumenausgleich zum Behälter bei Temperaturschwankungen. Dieses Rückfallen der Ventile in ihren unbestromten Zustand, bei Ausfall des elektrischen Systems bei einer Bremsung und der darauf einsetzenden Funktionalität der Entlastungsventile entspricht somit der oben bereits angesprochenen Full-Back-up-Rückfallebene, bei welcher noch eine hydraulisch-mechanische Grundbremsfunktion ausgeführt wird.

Eine Betätigung der Pumpe 42 findet bei einem Absinken des Speicherdrucks im Speicher 44 unter einen vorbestimmten Wert statt. Neben dieser Funktion wird der durch den Drucksensor 46 erfaßte Speicherdruck auch im Rahmen der Regelung ausgewertet, da er im wesentlichen den am Eingang der Einlaßventile liegenden Druck repräsentiert.

Die beschriebenen Steuerungs- bzw. Regelungsvorgänge sind mittels einer Steuereinheit 200 durchführbar. Aus Gründen der Übersichtlichkeit sind Verbindungsleitungen, welche das Steuergerät mit den einzelnen zu steuernden Bauelementen des elektrohydraulischen Bremssystems verbinden, lediglich steuergeräteseitig eingezeichnet und insgesamt mit 201 bezeichnet. Mit 100 bis 105 sind die Temperatursensoren bezeichnet, welche die Temperatur der Hydraulikflüssigkeit bzw. Bremsflüssigkeit wie oben erwähnt erfassen und an das Steuergerät 200 übertragen. In dem Steuergerät sind dann die Steuerungs- bzw. Überwachungsvorgänge, wie sie in der Beschreibungseinleitung beschrieben wurden, durchführbar. Es ist ebenfalls denkbar, die Temperatursignale auf ein weiteres Steuergerät, welches mit dem Steuergerät 200 in Wirkverbindung steht, zu übertragen.

In der dargestellten Ausführungsform sind sechs Temperatursensoren dargestellt. Mit dieser Anzahl von Sensoren ist eine gute Sicherheitsbetrachtung möglich (z. B. zwei-aus-drei Auswahl je Bremskreis, d.h. ein Sensorsignal wird bei drei Sensoren bei Übereinstimmung bei zwei Sensoren als richtig eingestuft), so daß die elektrohydraulische Bremsanlage auch bei Ausfall eines Sensors in der erfindungsgemäßen Weise weiter betreibbar und überwachbar ist. Die Leitungslängen zu den Temperatursensoren sind aufgrund der zeichnerischen Darstellung gewählt und stellen keinen funktionellen Zusammenhang dar. Neben den hier dargestellten Temperatursensoren, die direkt die Hydraulikflüssigkeitstemperatur bzw. Bremsflüssigkeitstemperatur erfassen können auch Sensoren eingesetzt werden, welche z. B. aufgrund von Bauteiltemperaturen, beispielsweise der Ventile, die Temperatur der elektrohydraulischen Bremsanlage bzw. des Hydroaggregats erfassen bzw. ermitteln.

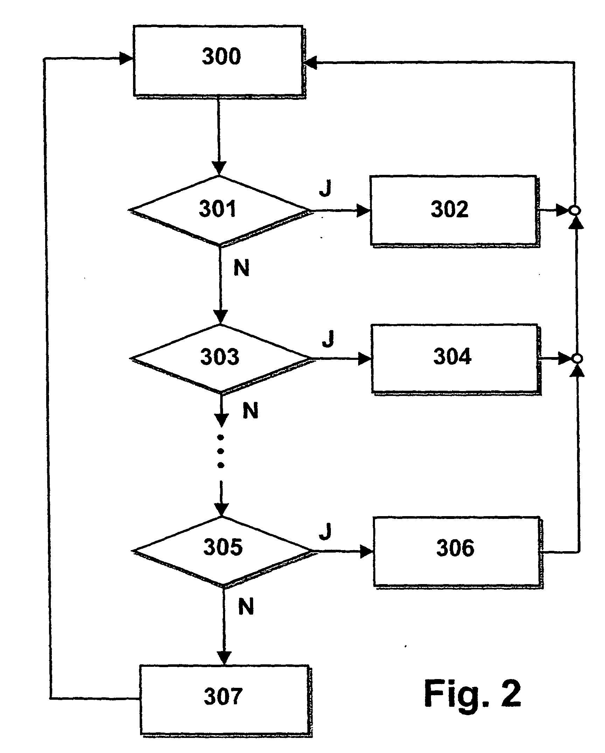

Figur 2 zeigt ein Verfahren in Form eines Flußdiagramms, in welchem die Temperaturinformation ausgewertet wird. In Block 300 erfolgt die Temperaturerfassung bzw. -schätzung. Ebenfalls in Block 300 ist eine Start- sowie Abbruchbedingung des Verfahrens lokalisiert. Eine Startbedingung kann beispielsweise die Betätigung des Startschalters des Fahrzeugs und damit die Erzeugung eines Start-Signals sein. Ein erneutes Betätigen zum Ausschalten entspräche dann einer möglichen Abbruchbedingung. Andererseits könnte nach dem Abschalten auch noch für einen gewissen Zeitraum der Verfahrensablauf aufrecht erhalten werden, beispielsweise um eine nachträgliche Ventilprüfung oder sonstige Überprüfungen von Systemen durchzuführen. Mit der aus Block 300 erfaßten Temperatur T gelangt man zur Abfrage 301. Darin wird nun abgefragt, ob die Temperatur T unterhalb eines ersten Grenzwertes TG1 liegt. Ist dies der Fall, gelangt man zu Block 302 in welchem diesem ersten Temperaturgrenzwert TG1 zugeordnete Maßnahmen M1 durchgeführt werden. Erreicht die Temperatur T den Grenzwert TG1 bzw. überschreitet diesen, gelangt man zu Abfrage 303. Hier wird nun überprüft, ob der Temperaturwert T sich unterhalb eines zweiten Grenzwertes TG2 befindet. Ist dies der Fall, werden in Block 304 zweite Maßnahmen M2 welche mit dem Temperaturgrenzwert TG2 korreliert sind, eingeleitet. Wird der zweite Grenzwert TG2 nun erreicht bzw. überschritten, gelangt man zu einer nächsten Abfrage. Dies kann mit beliebig vielen Grenzwerten TGn durchgeführt werden. So gelangt man zu einer letzten Abfrage 305 in welcher überprüft wird, ob der Temperaturwert T z.B. unterhalb des Grenzwertes TGn liegt. Ist dies der Fall, werden in Block 306 Maßnahmen Mn, eben in Verbindung mit dem Grenzwert TGn eingeleitet bzw. durchgeführt. Ist auch der höchste Grenzwert z.B. TGn erreicht oder überschritten, gelangt man zu Block 307, worin Maßnahmen Mn+1 für einen sehr hohen Temperaturwert eben größer TGn durchgeführt werden. In dem gerade dargestellten Beispiel bzw. in den in den Abfragen 301, 303, 305 dargestellten Bedingungen wird somit von positiven Grenzwerten TG ausgegangen. Ebenso ist das Verfahren aber für Temperaturgrenzwerte TG kleiner 0°C oder für Gemischtgrenzwerte kleiner sowie größer 0°C durchführbar. Wesentlich ist allgemein dabei, daß für bestimmte Temperaturen oder Temperaturbereiche im elektrohydraulischen Bremssystem bestimmte zugeordnete Maßnahmen M durchgeführt werden.

Diese Maßnahmen M beinhalten somit auch die schon vorher angesprochenen verschiedenen möglichen Rückfallebenen bestimmter Funktionszusammensetzung. In einer speziellen Ausführungsform können somit verschiedenen, vorgebbaren oder ermittelbaren Temperaturen oder Temperaturbereichen unterschiedliche Rückfallebenen zugeordnet werden, beispielsweise um wärmeerzeugende Prozesse zu minimieren. Dann wäre z.B. dem höchsten Grenzwert TGn bei Erreichung oder Überschreitung die Full-Back-up-Rückfallebene zugeordnet.

Aus den jeweiligen Maßnahmen gelangt man dann wieder zu Block 300 wo erneut die Temperatur T erfaßt wird. Somit können auch innerhalb der Maßnahmen-Blöcke 302, 304, 306, 307 bestimmte Zeitabschnitte vorgegeben werden, innerhalb derer die Maßnahmen durchgeführt werden bevor erneut eine Temperatur T erfaßt wird. Andererseits ist es möglich nach jedem Durchlauf die Temperatur T erneut zu erfassen und davon abhängig eingeleitete Maßnahmen M weiterzuführen oder abzubrechen.

Die Maßnahmen M werden dabei zur Steuerung des elektrohydraulischen Bremssystems eingesetzt bzw. verändert. Sie beziehen sich unter anderem auf die vorher ausgeführten und in den Ansprüchen genannten Einsatzgebiete bezüglich der Steuerung bzw. Regelung des elektrohydraulischen Bremssystems.

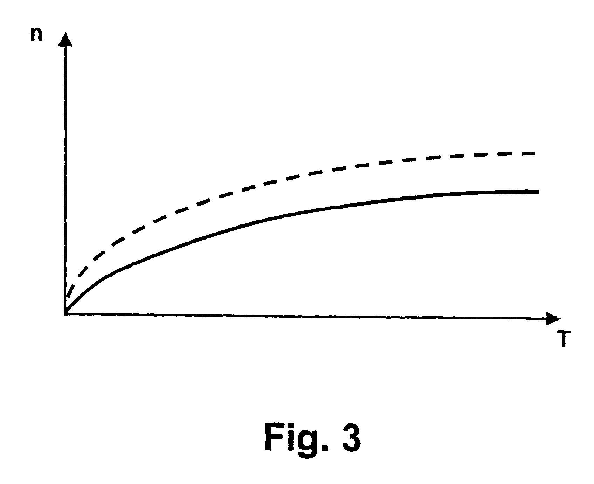

Ein spezielles Ausführungsbeispiel dazu ist die Verwendung der Temperatur im Bezug auf die Pumpendrehzahl. Der Füllgrad des Pumpenelementes bzw. der Pumpe 42 hängt von der Viskosität der Bremsflüssigkeit ab. Die Viskosität der Bremsflüssigkeit hängt stark von der Temperatur ab. Wird die Pumpe 42 mit einer Drehzahl nopt betrieben, bei der der Füllgrad der Pumpe optimal groß ist, so erhöht dies die Förderleistung der Pumpe. Diese Förderleistung ist höher, als wenn die Pumpe bei voller Drehzahl des Pumpenmotors und tiefer Temperatur kaum gefüllt würde. Wird somit die Drehzahl des Pumpenmotors so über der Temperatur angepaßt, daß der Füllgrad der Pumpe optimal groß ist, so erhöht dies die Förderleistung der Pumpe. Es wird somit der Pumpenmotor derart getaktet betrieben, also das Puls-Pulspausen-Verhältnis dermaßen eingestellt, daß sich die Drehzahl n der Pumpe immer so einstellt, daß der Füllgrad der Pumpe optimal groß wird. Diese Pumpendrehzahl n ist somit wegen der starken Abhängigkeit der Viskosität von der Temperatur T ebenfalls temperaturabhängig. Für Figur 2 bedeutet dies, daß beispielsweise abhängig von der jeweiligen Temperaturgrenze TG unterschiedliche Pumpendrehzahlen n eingestellt werden könnten. Bis zu einer Temperaturgrenze TG1 wird die Pumpe somit mit einer Drehzahl n1 betrieben. Im zweiten Temperaturabschnitt bis TG2 wird die Pumpendrehzahl auf n2 verändert. Und dies läßt sich nun fortsetzen bis zur Grenze TGn bis zu der die Pumpe mit einer Drehzahl nn betrieben wird. Oberhalb der Temperaturgrenze TGn wird folgerichtig die Drehzahl nn+1 verwendet. In einem Fall kann somit die Pumpendrehzahl n linear mit der Temperatur T erhöht werden. Ein weiterer in der Praxis eher relevanter Zusammenhang zwischen Pumpendrehzahl n und Temperatur T läßt die Pumpendrehzahl zwar prinzipiell mit steigender Temperatur ebenfalls steigen, die entstehende Kurve zeigt aber eine geringere Steigung zu höheren Temperaturen hin. Somit verläuft diese Kurve nicht linear sondern in einem anderen funktionellen Zusammenhang, wie beispielsweise dem in Figur 3 dargestellten.

Der gestrichelte Kurvenverlauf zeigt dabei eine erhöhte Förderleistung durch Drehzahlerhöhung gegenüber dem durchgezogenen Kurvenverlauf. Damit kann in Figur 2 statt der Verwendung einzelner Temperaturbereiche sprich Temperaturgrenzwerte TG der Zusammenhang auch über eine solche Kennlinie bzw. ein Kennfeld hergestellt werden.

## Patentansprüche

1. Elektrohydraulisches Bremssystem, bei dem eine Hydraulikflüssigkeit aus einem Druckspeicher über Ventilmittel in jeweilige Radbremszylinder einsteuerbar ist, wobei die Hydraulikflüssigkeit mit einer Pumpe in den Druckspeicher förderbar ist, und wenigstens
- mehrere Temperatursensoren (100 bis 105) zur Erfassung einer Temperatur der Hydraulikflüssigkeit, und
- ein Drucksensor (46) zur Erfassung einer den aktuellen Druck im Druckspeicher (44) repräsentierenden Druckgröße, und
- ein Mittel (200) zur Steuerung bzw. Regelung des elektrohydraulischen Bremssystems unter Berücksichtigung sowohl
- der erfassten Temperatur als auch
- des erfassten Drucks
vorgesehen sind,
wodurch im Fehlerfall eines Temperatursensors im Rahmen einer Sicherkeitsbetrachtung das elektrohydraulische Bremssystem bezüglich der Berücksichtigung der Temperatur austeuerbar bzw. regelbar bleibt.

2. Verfahren zur Steuerung eines elektrohydraulischen Bremssystems eines Kraftfahrzeugs, wobei
- die Temperatur der Hydraulikflüssigkeit mittels mehreren Temperatursensoren und
- der Druck des Druckspeichers mittels wenigstens eines Drucksensors des elektrohydraulischen Bremssystems erfasst werden, und
die Steuerung des elektrohydraulischen Bremssystems unter Berücksichtigung
- der erfassten Temperatur und
- des erfassten Druckes
durchgeführt wird,
wodurch im Fehlerfall eines Temperatursensors im Rahmen einer Sicherkeitsbetrachtung das elektrohydraulische Bremssystem bzgl. der Berücksichtigung der Temperatur augesteuert bzw. geregelt wird.

3. Verfahren nach Anspruch 2, **dadurch gekennzeichnet, dass** in Abhängigkeit von der erfassten Temperatur unter Berücksichtigung einer ausreichenden Funktionalität des elektrohydraulischen Bremssystems wärmeerzeugende Prozesse minimiert werden.

4. Verfahren nach Anspruch 2, **dadurch gekennzeichnet, dass**
- die erfasste Temperatur mit wenigstens einem vorgebbaren Temperaturgrenzwert verglichen wird und
- abhängig von dem Vergleich verschiedene Maßnahmen eingeleitet werden.

5. Verfahren nach Anspruch 4, **dadurch gekennzeichnet, dass** die verschiedenen Maßnahmen derart durchgeführt werden, dass sie zur Minimierung Wärme erzeugender Prozesse im elektrohydraulischen Bremssystem führen.

6. Verfahren nach einem der vorhergehenden Ansprüche 2 oder 3, **dadurch gekennzeichnet, dass** in Abhängigkeit von der erfassten Temperatur das Puls-Pulspausen-Verhältnis bei einer getakteten Ansteuerung einer Pumpe des elektrohydraulischen Bremssystems variiert wird.

7. Verfahren nach Anspruch 4, **dadurch gekennzeichnet, dass** abhängig von dem Vergleich mit wenigstens einem vorgebbaren Temperaturgrenzwert unterschiedliche Drehzahlen der Pumpe des elektrohydraulischen Bremssystems eingestellt werden.

8. Verfahren nach einem der Ansprüche 2 bis 7, **dadurch gekennzeichnet, dass** die erfasste Temperatur bei der Regelung des Systemdrucks in dem elektrohydraulischen Bremssystem, insbesondere während eines Druckaufbaus in wenigstens einer Radbremse, durch Öffnen entsprechender Einlassventile berücksichtigt wird.

9. Verfahren nach einem der Ansprüche 2 bis 8, **dadurch gekennzeichnet, dass** die erfasste Temperatur zur Abschätzung des Drucks in einem Druckspeicher des elektrohydraulischen Bremssystems verwendet wird.

10. Verfahren nach einem der Ansprüche 2 bis 9, **dadurch gekennzeichnet, dass** die erfasste Temperatur zur Überwachung der Ladung und/oder der Entladung des Druckspeichers verwendet wird.

11. Verfahren nach einem der Ansprüche 2 bis 10, **dadurch gekennzeichnet, dass** die erfasste Temperatur bei der Überwachung bzw. Prüfung von Ventilen vor oder während der Fahrt und/oder nach Fahrtende des Kraftfahrzeugs berücksichtigt wird.

12. Verfahren nach einem der Ansprüche 2 bis 11, **dadurch gekennzeichnet, dass** die erfasste Temperatur bei der Überwachung, der für die elektrohydraulische Bremse maßgeblichen Eingangsgrößen, insbesondere bei einer Pedalwegssimulatorüberwachung, berücksichtigt wird.

13. Verfahren nach einem der Ansprüche 2 bis 12, **dadurch gekennzeichnet, dass** die erfasste Temperatur bei der Steuerung und/oder Überwachung der Druckmodulatoren der jeweiligen Radbremsen verwendet wird.

14. Verfahren nach einem der Ansprüche 2 bis 13, **dadurch gekennzeichnet, dass** die erfasste Temperatur zur Überwachung eines Entlüftungszustandes für den Fall verwendet wird, dass wenigstens ein Ventilmittel in seinen unbestromten Zustand zurückfällt.

15. Verfahren nach einem der Ansprüche 2 bis 14, **dadurch gekennzeichnet, dass** die erfasste Temperatur zur Überwachung des Verschleißzustandes des Druckspeichers verwendet wird.

16. Verfahren nach einem der Ansprüche 2 bis 15, **dadurch gekennzeichnet, dass** die erfasste Temperatur zur Einstellung der jeweils gewünschten funktionellen Rückfallebene des elektrohydraulischen Bremssystems verwendet wird.

## Claims

1. Electro-hydraulic braking system in which a hydraulic fluid can be fed from a pressure accumulator into respective wheel brake cylinders via valve means, wherein the hydraulic fluid can be delivered into the pressure accumulator using a pump, and at least
- a plurality of temperature sensors (100 to 105) for sensing a temperature of the hydraulic fluid, and
- a pressure sensor (46) for sensing a pressure variable which represents the current pressure in the pressure accumulator (44), and
a means (200) for controlling or regulating the electro-hydraulic brake system taking into account both
- the sensed temperature and
- the sensed pressure
are provided, as a result of which, in the event of a fault in the temperature sensor, the electro-hydraulic brake system remains able to be actuated or regulated in terms of taking into account the temperature within the scope of a safety consideration.

2. Method for controlling an electro-hydraulic brake system of a motor vehicle, wherein
- the temperature of the hydraulic fluid is sensed by means of a plurality of temperature sensors, and
- the pressure of the pressure accumulator is sensed by means of at least one pressure sensor of the electro-hydraulic brake system, and
the electro-hydraulic brake system is controlled taking into account
- the sensed temperature and
- the sensed pressure,
as a result of which, in the case of a fault in the temperature sensor, the electro-hydraulic brake system is actuated or regulated with respect to taking into account the temperature within the scope of a safety consideration.

3. Method according to Claim 2, **characterized in that** heat-generating processes are minimized as a function of the sensed temperature taking into account a sufficient functionality of the electro-hydraulic brake system.

4. Method according to Claim 2, **characterized in that**
- the sensed temperature is compared with at least one predefinable temperature limiting value, and
- various measures are initiated as a function of a comparison.

5. Method according to Claim 4, **characterized in that** the various measures are carried out in such a way that they lead to the minimization of heat-producing processes in the electro-hydraulic brake system.

6. Method according to one of the preceding Claims 2 or 3, **characterized in that** the mark-to-space ratio is varied as a function of the sensed temperature during clocked actuation of a pump of the electro-hydraulic brake system.

7. Method according to Claim 4, **characterized in that** different rotational speeds of the pump of the electro-hydraulic brake system are set as a function of the comparison with at least one predefinable temperature limiting value.

8. Method according to one of Claims 2 to 7, **characterized in that** during the control of the system pressure in the electro-hydraulic brake system, in particular during a pressure build-up in at least one wheel brake the sensed temperature is taken into account by opening corresponding inlet valves.

9. Method according to one of Claims 2 to 8, **characterized in that** the sensed temperature is used to estimate the pressure in a pressure accumulator of the electro-hydraulic brake system.

10. Method according to one of Claims 2 to 9, **characterized in that** the sensed temperature is used to monitor the charging and/or discharging of the pressure accumulator.

11. Method according to one of Claims 2 to 10, **characterized in that** the sensed temperature is taken into account during the monitoring or checking of valves before or during the journey and/or after the end of the journey of the motor vehicle.

12. Method according to one of Claims 2 to 11, **characterized in that** the sensed temperature is taken into account during the monitoring of the input variables which are decisive for the electro-hydraulic brake, in particular during monitoring of a pedal-travel simulator.

13. Method according to one of Claims 2 to 12, **characterized in that** the sensed temperature is used during the control and/or monitoring of the pressure modulators of the respective wheel brakes.

14. Method according to one of Claims 2 to 13, **characterized in that** the sensed temperature is used to monitor a venting state for the case in which at least one valve means returns to its non-energized state.

15. Method according to one of Claims 2 to 14, **characterized in that** the sensed temperature is used to monitor the wear state of the pressure accumulator.

16. Method according to one of Claims 2 to 15, **characterized in that** the sensed temperature is used to set the respectively desired functional fall-back level of the electro-hydraulic brake system.

## Revendications

1. Système de freinage électrohydraulique dans lequel
- un fluide hydraulique, provenant d'un réservoir sous pression, peut être envoyé par commande dans un cylindre de frein de roue par l'intermédiaire de moyens de soupape, le fluide hydraulique pouvant être refoulé par une pompe dans le réservoir sous pression,
- il est prévu plusieurs capteurs de température (100 à 105) pour détecter la température du fluide hydraulique, et un capteur de pression (46) pour détecter une grandeur de pression représentant la pression régnant actuellement dans le réservoir sous pression (44) ainsi qu'un moyen (200) pour commander et réguler le système de freinage électrohydraulique, en tenant compte à la fois de la température détectée et de la pression détectée,
- en cas de défaut d'un capteur de température, dans le cadre du respect de la sécurité, le système hydraulique reste commandable et régulable en ce qui concerne la prise en compte de la température.

2. Procédé de freinage pour commander un système électrohydraulique de freinage d'un véhicule automobile, selon lequel dans ce système,
- la température du fluide hydraulique est détectée par plusieurs détecteurs de température,
- la pression du réservoir sous pression est détectée par au moins un capteur de pression,
la commande du système électrohydraulique de freinage est réalisée en tenant compte :
- de la température saisie,
- de la pression saisie, et
- en cas de défaut d'un capteur de température, dans le cadre du respect de la sécurité, le système électrohydraulique de freinage est commandé ou régulé en ce qui concerne la prise en compte de la température.

3. Procédé de freinage selon la revendication 2,
**caractérisé en ce que**
en fonction de la température détectée et en tenant compte d'une fonctionnalité suffisante du système électrohydraulique de freinage, des processus produisant de la température sont minimisés.

4. Procédé de freinage selon la revendication 2,
**caractérisé en ce que**
la température détectée est comparée
- avec au moins une valeur limite de température qui peut être prédéfinie, et
- différentes dispositions sont prises en fonction du résultat de cette comparaison.

5. Procédé de freinage selon la revendication 4,
**caractérisé en ce que**
les différentes dispositions sont mises en oeuvre de manière à minimiser les processus produisant de la chaleur dans le système électrohydraulique de freinage.

6. Procédé de freinage selon une des revendications 2 et 3,
**caractérisé en ce qu'**
on fait varier en fonction de la température détectée, le rapport impulsions - pauses entre impulsions d'une commande cadencée d'une pompe du système électrohydraulique de freinage.

7. Procédé de freinage selon la revendication 4,
**caractérisé en ce qu'**
en fonction de la comparaison avec au moins une valeur limite de température pouvant être prédéfinie, la pompe du système électrohydraulique de freinage est réglée à des vitesses de rotation différentes.

8. Procédé de freinage selon une des revendications 2 à 7,
**caractérisé en ce que**
lors de la régulation de la pression dans le système électrohydraulique de freinage, en particulier pendant une montée de la pression dans au moins un cylindre de frein de roue, la température détectée est prise en compte en ouvrant des soupapes d'admission correspondantes.

9. Procédé de freinage selon une des revendications 2 à 8,
**caractérisé en ce que**
la température détectée est utilisée pour évaluer la température dans le réservoir sous pression du système électrohydraulique de freinage.

10. Procédé de freinage selon une des revendications 2 à 9,
**caractérisé en ce que**
la température détectée est utilisée pour surveiller la charge et/ou la décharge du réservoir sous pression.

11. Procédé de freinage selon une des revendications 2 à 10,
**caractérisé en ce que**
la température détectée est prise en compte lors de la surveillance et du contrôle de soupapes, avant ou pendant la circulation, et/ou après que le véhicule ait cessé de circuler.

12. Procédé de freinage selon une des revendications 2 à 11,
**caractérisé en ce que**
la température détectée est prise en compte lors de la surveillance des valeurs d'entrée déterminantes pour les freins électrohydrauliques, en particulier lors d'une surveillance du simulateur de la course de la pédale.

13. Procédé de freinage selon une des revendications 2 à 12,
**caractérisé en ce que**
la température détectée est utilisée lors de la commande et/ou de la surveillance des modulateurs de pression des différents freins de roue.

14. Procédé de freinage selon une des revendications 2 à 13,
**caractérisé en ce que**
la température détectée est utilisée pour surveiller un état de dégazage dans le cas où au moins un moyen de soupape revient à son état de non alimentation.

15. Procédé de freinage selon une des revendications 2 à 14,
**caractérisé en ce que**
la température détectée est utilisée pour surveiller l'état d'usure du réservoir sous pression.

16. Procédé de freinage selon une des revendications 2 à 15,
**caractérisé en ce que**
la température détectée est utilisée pour régler le plan de retour fonctionnel désiré pour le système électrohydraulique de freinage.
